# EUROPÄISCHE PATENTSCHRIFT

(11) **EP 1 269 067 B1**
(45) Veröffentlichungstag und Bekanntmachung des Hinweises auf die Patenterteilung: **09.11.2005**
(21) Anmeldenummer: 01911614.4
(22) Anmeldetag: 07.02.2001
(51) Int. Cl.: F16M 11/06

(54) **TRAGARMSYSTEM**
LUG SYSTEM
SYSTEME DE BRAS DE SUPPORT

(30) Priorität: 17.03.2000 DE 10013283
(43) Veröffentlichungstag der Anmeldung: 02.01.2003
(73) Patentinhaber: Rittal GmbH & Co. KG, 35745 Herborn (DE)
(72) Erfinder: NEUHOF, Markus, 35630 Ehringshausen-Niederlemp (DE); SCHREINER, Thomas, 35767 Breitscheid (DE); MÜLLER, Matthias, 35708 Haiger (DE); SCHMITT, Heinz, 35716 Dietzhölztal (DE)
(74) Vertreter: Fleck, Hermann-Joseph
(86) Internationale Anmeldenummer: PCT/EP2001/001296
(87) Internationale Veröffentlichungsnummer: WO 2001/069122

(56) Entgegenhaltungen:
- DE-A- 4 033 747
- DE-A- 19 501 027
- DE-C- 19 803 570

## Beschreibung

Die Erfindung betrifft ein Tragarmsystem mit einem Tragarm und einem Aufnahmegehäuse, wobei an das Aufnahmegehäuse über einen Adapter ein Drehgelenk angeschlossen ist, und wobei der Tragarm, das Drehgelenk und der Adapter einen Kabelkanal bilden, der in den Innenraum des Aufnahmegehäuses mündet.

Ein derartiges Tragarmsystem ist aus der DE 40 33 747 C2 bekannt. Das Tragarmsystem weist einen Tragarm auf, der über ein als Aufsatzgelenk ausgebil-detes Drehgelenk an ein Aufnahmegehäuse angekoppelt ist. Das Aufnahmegehäuse kann als Bedien- oder Anzeigegehäuse ausgebildet sein. Das Drehgelenk ist über einen Adapter an die waagrechte Oberseite des Gehäuses angekoppelt. Die Anbindung erfolgt über Schraubverbindungen. Demgemäß sind Befestigungsschrauben durch einen Durchbruch der Oberseite des Gehäuses hindurchgeführt, durch den Adapter hindurch gesteckt und in das Drehgelenk eingeschraubt.

Bei einer solchen Anordnung muss die Oberseite des Gehäuses ausreichend groß dimensioniert werden, um eine Anbindung des Drehgelenkes erreichen zu können. Die Oberseite des Gehäuses ist als dünnwandige Blechplatte ausgebildet. Wenn im Innenraum des Aufnahmegehäuses schwere Einbauten befestigt sind, so sind für eine stabile Anbindung an das Drehgelenk zusätzliche Versteifungsvorrichtungen erforderlich, so dass ein Ausreißen der Schraubverbindung zwischen der Gehäuseoberseite und dem Drehgelenk verhindert ist.

Es ist Aufgabe der Erfindung, ein Tragarmsystem der eingangs erwähnten Art zu schaffen, bei dem eine stabile Anbindung des Drehgelenkes auch bei geringen Tiefenabmessungen des Aufnahmegehäuses möglich ist.

Diese Aufgabe wird dadurch gelöst, dass das Aufnahme-Gehäuse einen aus Rahmenprofilen zusammengesetzten Gehäuserahmen aufweist, der rückseitig mit einer getrennten Rückwand verschlossen oder verschließbar ist, und dass der Adapter mit wenigstens einem der Rahmenprofile verbunden ist und einen Verbindungsabschnitt für das Drehgelenk aufweist, der rückseitig über das Rahmenprofil vorsteht.

Das Aufnahmegehäuse wird seitlich von einem Gehäuserahmen begrenzt, der aus Rahmenprofilen zusammengesetzt ist und damit eine steife und stabile Einheit bildet. Das Drehgelenk kann über den Adapter direkt an diese Einheit angeschlossen werden. Der Adapter selbst bildet einen Verbindungsabschnitt, der rückseitig über das Aufnahmegehäuse vorsteht und an dem die Anbindung des Drehgelenkes erfolgt. Damit ist die Gehäusedimensionierung unabhängig von der Ausgestaltung des Drehgelenkes frei wählbar. Insbesondere lassen sich auch sehr flach bauende Aufnahmegehäuse verwirklichen, die beispielsweise zur Aufnahme von Flachbildschirmen verwendet werden.

Die optische Erscheinung des Gehäuserahmens wird dann nicht beeinträchtigt, wenn vorgesehen ist, dass der Verbindungsabschnitt des Adapters eine Aufsatzfläche aufweist, an die das Drehgelenk angekoppelt ist, und dass die Aufsatzfläche parallel zu der zugeordneten Seite des Gehäuses angeordnet ist und sich an das angekoppelte Rahmenprofil anschließt.

Dieses ist insbesondere dann von Vorteil, wenn der Gehäuserahmen als Designelement ausgebildet ist. Über die parallel zur Gehäuseseite angeordnete Aufsatzfläche lässt sich der Tragarm derart ankoppeln, dass er hinsichtlich seiner Längserstreckung rechtwinklig zu dieser zugeordneten Profilseite angeordnet ist.

Hierbei kann insbesondere vorgesehen sein, dass die Aufsatzfläche des Adapters in einer Ebene mit einer parallel zur zugeordneten Gehäuseseite angeordneten Profilseite des Rahmenprofils liegt.

Zur geordneten Führung von Kabeln durch den Adapter kann vorgesehen sein, dass der Adapter ein Gehäuse aufweist, in das der Kabelkanal eingebracht ist, dass der Kabelkanal über eine erste Kabeldurchführung in räumlicher Verbindung mit dem Innenraum des Aufnahmegehäuses und über eine zweite Kabeldurchführung in räumlicher Verbindung mit einem von dem Tragarm gebildeten Kabelkanal steht, dass die zweite Kabeldurchführung in den über die Gehäuserückseite vorstehenden Verbindungsabschnitt des Adapters eingebracht ist, und dass das Gehäuse des Adapters im Bereich zwischen den beiden Kabeldurchführungen eine Revisionsöffnung aufweist, die in den Kabelkanal des Adapters mündet und die mit einer Abdeckung verschließbar ist.

Die Revisionsöffnung erleichtert es, Kabel durch den Kabelkanal dann zu schleifen, wenn die beiden Kabeldurchführungen zueinander im Winkel angeordnet sind.

Eine mögliche Ausgestaltung eines Aufnahmegehäuses ist derart gewählt, dass der Adapter mit einem Ansatz in die offene Rückseite des Aufnahmegehäuses hinein ragt, dass der Kabelkanal des Adapters durch den Ansatz hindurch in das Aufnahmegehäuse mündet, dass der Ansatz einen Dichtabschnitt aufweist, der in einen Dichtabschnitt des Gehäuserahmens übergeht, dass eine, die Gehäuserückseite überdeckende Rückwand an dem Gehäuserahmen angebracht ist, und dass die Rückwand auf einer, zwischen den Dichtabschnitten und der Rückwand angeordneten Dichtung abgestützt ist.

Wenn dabei vorgesehen ist, dass die Rückwand einen Ausschnitt aufweist, der zu einer Rückwandseite hin geöffnet ist, dass der Rand des Ausschnittes über die Dichtung auf den Dichtabschnitt des Ansatzes abgestützt ist, so kann die Rückwand in dem Aufnahmegehäuse abgenommen werden, ohne dass dabei auch eine Manipulation am Adapter vorgenommen werden muss.

Die stabile Anbindung des Tragarmes an das Aufnahmegehäuse wird zusätzlich dadurch verbessert, dass der Adapter ein Stützteil aufweist, das in den Innenraum des Aufnahmegehäuses hinein ragt und an der Innenseite des zugeordneten Rahmenprofils anliegt, und dass das Stützteil innenseitig mit dem Rahmenprofil verbunden ist.

Dabei kann das Stützteil lösbar an dem Adapter befestigt sein. Hierdurch lässt sich ein Baukastensystem schaffen, bei dem der Adapter ein Basisteil bildet. An diesem Basisteil können unterschiedlich gestaltete Stützteile angebracht werden. Die Stützteile sind dabei auf unterschiedliche Typen von Aufnahmegehäusen angepasst ausgebildet.

Die stabile Anbindung des Adapters an das Aufnahmegehäuse kann auch dergestalt vorgenommen werden, dass in die Rahmenprofile des Gehäuserahmens eine Befestigungsnut eingearbeitet ist, an der eine die offene Rückseite des Aufnahmegehäuses überdeckende Rückwand befestigt ist, und dass der Adapter über die Befestigungsnut an den Gehäuserahmen angeschraubt ist.

Die Erfindung wird im Folgenden anhand eines in den Zeichnungen dargestellten Ausführungsbeispiels näher erläutert. Es zeigen:
- Fig. 1: in perspektivischer Rückansicht ein Tragarmsystem mit einem Tragarm, einem Drehgelenk und einem Aufnahmegehäuse,
- Fig. 2: in Seitenansicht und im Teilschnitt die Darstellung gemäß Fig. 1 und

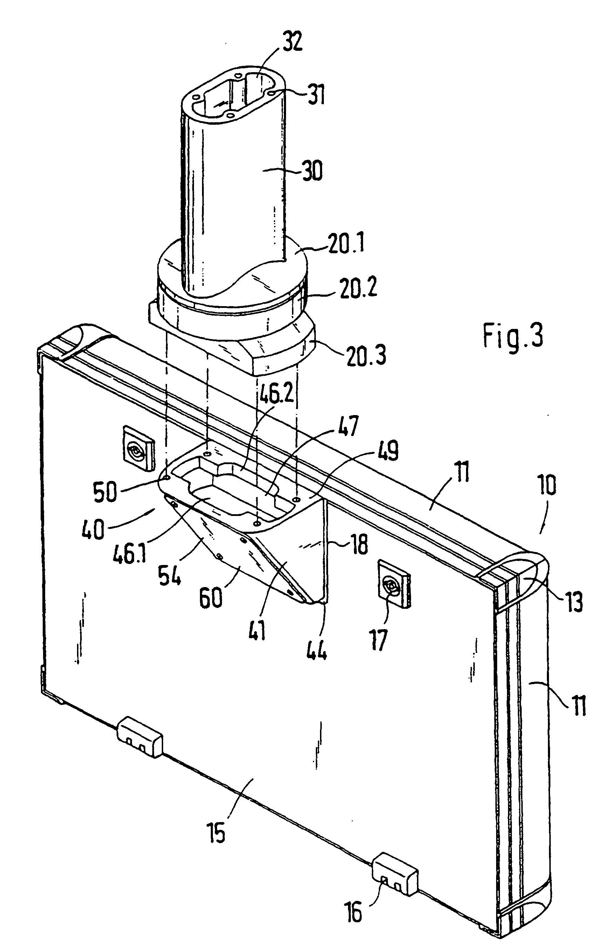

- Fig. 3: die Darstellung gemäß Fig. 1, jedoch mit geschlossener Rückwand.

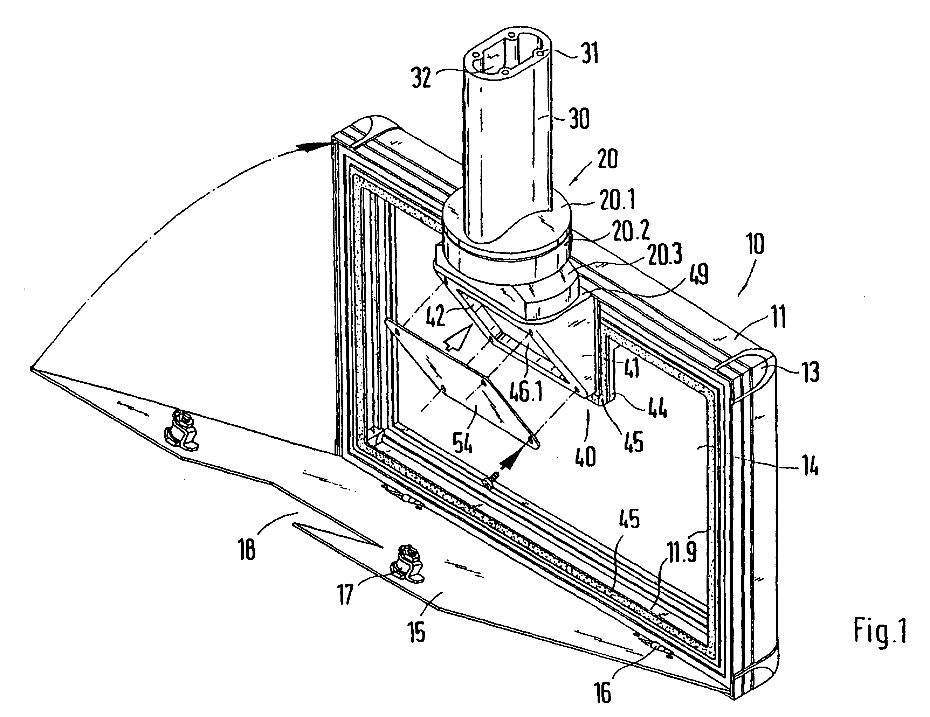

In Fig. 1 ist ein Tragarm 30 dargestellt, der als Hohlprofilabschnitt ausgebildet ist. Der Tragarm 30 ist als Strangpressprofil gefertigt und weist in Profillängsrichtung verlaufende Schraubkanäle 31 auf. Von dem Tragarm 30 wird ein Kabelkanal 32 umschlossen. An seinem unteren Ende ist der Tragarm 30 an ein Drehgelenk 20 angekoppelt. Das Drehgelenk 20 weist zwei Gelenkteile 20.1 und 20.2 auf. Die beiden Gelenkteile 20.1 und 20.2 können gegeneinander um eine vertikale Drehachse verdreht werden. Die Anbindung des oberen Gelenkteiles 20.1 an den Tragarm erfolgt mittels Befestigungsschrauben, die in die Schraubkanäle 31 des Tragarmes 30 eingeschraubt sind. Das zweite Gelenkteil 20.2 ist über ein Koppelstück 20.3 mit einem Adapter 40 verbunden.

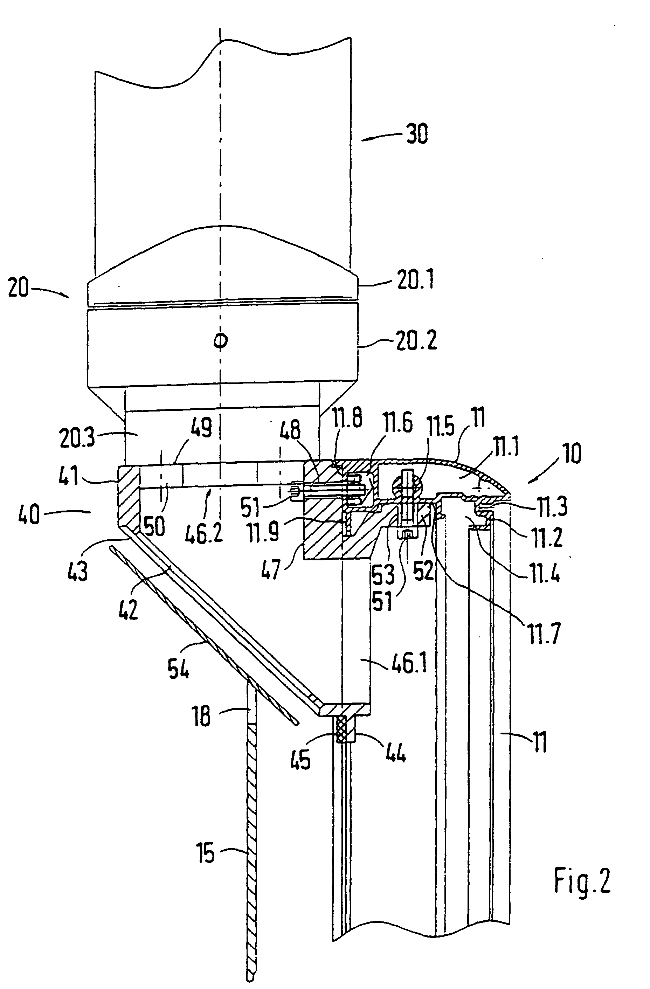

Die detaillierte Ausgestaltung des Adapters 40 lässt sich näher der Fig. 2 entnehmen. Wie diese Darstellung zeigt, weist der Adapter 40 ein Gehäuse 41 auf. Dieses Gehäuse 41 ist von einem Kabelkanal durchdrungen. Der Kabelkanal steht über das Drehgelenk 20 in räumlicher Verbindung mit dem Kabelkanal 32 des Tragarmes. Demgemäß können Kabel, vom Tragarm 30 kommend, über eine obere Kabeldurchführung 46.2 in den Kabelkanal des Adapters 40 eingeführt und über eine zweite, unten liegende Kabeldurchführung 46.1 1 in den Innenraum eines Aufnahmeraumes eingeführt werden. Die Ausgestaltung des Aufnahmegehäuses wird später näher erläutert.

Der Kabelkanal ist seitlich über eine Revisionsöffnung 42 zugänglich. Diese Revisionsöffnung 42 kann mittels einer Abdeckung 54 verschlossen werden. Zur Ausrichtung der Abdeckung 54 an dem Gehäuse 41 ist ein Zentrierabsatz 43 vorgesehen. Wie Fig. 1 erkennen lässt, lässt sich die Abdeckung 54 mit dem Adapter 40 verschrauben. Zur Ankopplung des Drehgelenkes 20 an den Adap-ter 40 ist ein Verbindungsabschnitt 49 verwendet. Der Verbindungsabschnitt bildet eine ebene Auflagefläche, auf der das Koppelstück 20.2 des Drehge-lenkes 20 aufgesetzt ist. In den Verbindungsabschnitt 49 sind Schraubaufnahmen 50 eingearbeitet. Durch diese Schraubaufnahmen 50 können Befestigungsschrauben hindurch geführt und in entsprechende Gewindeaufnahmen des Koppelstückes 20.3 eingeschraubt werden.

Der Adapter 40 kann an ein Aufnahmegehäuse angeschraubt werden. Das Aufnahmegehäuse weist einen Gehäuserahmen 10 auf, der aus vertikalen und horizontalen Rahmenprofilen 11 zusammengesetzt ist. Die Rahmenprofile 11 sind in den Eckbereichen des Gehäuserahmens 10 mittels Eckverbindern 13 verbunden. Der Gehäuserahmen bildet eine Front-Öffnung 14, die mit einer Abdeckplatte verschlossen werden kann. In die Abdeckplatte lassen sich Bedienelemente oder Anzeigevorrichtungen einsetzen. Denkbar ist auch, dass ein einziger Flachbildschirm in die Frontöffnung eingebaut ist. Zur Befestigung der vorderen Abdeckplatte bzw. des Flachbildschirmes ist eine gegenüber der Gehäusevorderseite zurück versetzte Frontwandaufnahme 11.2 in die einzelnen Rahmenprofile 11 eingearbeitet. Benachbart zu der Frontwandaufnahme 11.2 ist ein Schraub- und/oder Rastkanal 11.3 angeordnet. An diesen lässt sich die Frontwand bzw. der Flachbildschirm fixieren. Die Rahmenprofile sind als Strangpressprofile ausgebildet, die eine Hohlkammer 11. 1 umschließen. Im Bereich dieser Hohlkammer ist ein Schraubkanal 11.5 vorgesehen. Zur Montage von Einbauten im Innenraum des Aufnahmegehäuses ist eine Befestigungsnut 11.4 verwendet. Eine weitere Befestigungsnut 11.6 ist an der Rückseite der Rahmenprofile vorgesehen. In diese rückseitige Befestigungsnut 11.6 kann eine Käfigmutter eingesetzt werden. Die Käfigmutter dient zur Anbindung des Adap-ters 40. Der Adapter wird mit einem Ansatz 47 auf einen Stützabschnitt 11.8 des oberen horizontalen Rahmenprofiles 11 aufgesetzt. Der Ansatz 47 weist eine oder mehrere Schraubaufnahmen 48 auf. Durch diese Schraubaufnahmen 48 kann eine Befestigungsschraube 51 durchgesteckt und in die in der Befestigungsnut 11.6 gehaltene Käfigmutter eingeschraubt werden.

Wie die Fig. 2 erkennen lässt, ist an den Ansatz 47 ein Stützteil 52 an-gekoppelt. Das Stützteil 52 ragt in den Innenraum des Aufnahmegehäuses. Das Stützteil 52 unterfängt das horizontale Rahmenprofil 11 und liegt an einer Profilinnenseite 11.7 des Rahmenprofiles 11 an. In das Stützteil 52 sind Befestigungsaufnahmen 53 eingebracht. Durch diese Befestigungsaufnahmen 53 können Befestigungsschrauben 51 hindurch geführt und in den Schraubkanal 1 1 .5 des Rahmenprofiles 11 eingeschraubt werden.

Wie sich aus der Fig. 1 näher ersehen lässt, sitzt der Adapter 40 im Bereich seines Ansatzes 47 einen nach außen stehenden Dichtabschnitt 44. Der Dichtabschnitt 44 geht bündig in einen Dichtabschnitt 11.9 des oberen horizontalen Rahmenprofiles 11 über. Auf den Dichtabschnitt 44 des Adapters 40 und die Dichtabschnitte 11.9 der Rahmenprofile 11 ist eine umlaufende Dichtung 45 aufgeschäumt. Wie die Fig. 1 erkennen lässt, kann an diese Dichtung 45 eine Rückwand 15 abgedichtet aufgelegt werden. Die Rückwand 15 ist über Scharniere 16 an das untere horizontale Rahmenprofil 11 angekoppelt. Die Scharniere 16 bilden eine horizontale Schwenkachse, über die die Rückwand 15 abgeklappt werden kann. Die Rückwand 15 weist bandseitig einen Ausschnitt 18 auf. Die Ränder des Ausschnittes 18 stützen sich auf den Abschnitten der Dichtung 45 ab, die den Dichtabschnitten 44 des Adapters 40 zugeordnet sind.

Der Ausschnitt 18 ist so dimensioniert, dass die Rückwand bei angebautem Adapter 40 auf- bzw. abgeklappt werden kann. In der geschlossenen Stellung der Rückwand kann diese mittels Schlössern 17 gesichert werden. Die Schlös-ser 17 weisen einen Vorreiber auf, der hinter den Dichtabschnitt 11.9, dem Innenraum des Aufnahmegehäuses zugekehrt, aufgeschoben werden kann. Anstatt der anscharnierten Rückwand 15 lässt sich auch eine Rückwand 15 verwenden, die als Deckel ausgebildet ist. Diese Rückwand lässt sich dann an der Befestigungsnut 11.6 der Rahmenprofile 11 unter Verwendung von Käfigmuttern anschrauben.

## Patentansprüche

1. Tragarmsystem mit einem Tragarm und einem Aufnahmegehäuse, wobei an das Aufnahmegehäuse über einen Adapter ein Drehgelenk angeschlossen ist, und wobei der Tragarm, das Drehgelenk und der Adapter einen Kabelkanal bilden, der in den Innenraum des Aufnahmegehäuses mündet,
**dadurch gekennzeichnet,**
**dass** das Aufnahmegehäuse einen aus Rahmenprofilen (11) zusammengesetzten Gehäuserahmen aufweist, der rückseitig mit einer getrennten Rückwand (15) verschlossen oder verschließbar ist, und
**dass** der Adapter (40) mit wenigstens einem der Rahmenprofile (11) verbunden ist und einen Verbindungsabschnitt (49) für das Drehgelenk (20) aufweist, der rückseitig über das Rahmenprofil (11) vorsteht.

2. Tragarmsystem nach Anspruch 1,
**dadurch gekennzeichnet,**
**dass** der Verbindungsabschnitt (49) des Adapters (40) eine Aufsatzfläche aufweist, an die das Drehgelenk (20) angekoppelt ist, und
**dass** die Aufsatzfläche parallel zu der zugeordneten Seite des Gehäuses angeordnet ist und sich an das angekoppelte Rahmenprofil (11) anschließt.

3. Tragarmsystem nach Anspruch 2,
**dadurch gekennzeichnet,**
**dass** die Aufsatzfläche des Adapters (40) in einer Ebene mit einer parallel zur zugeordneten Gehäuseseite angeordneten Profilseite des Rahmenprofils (11) liegt.

4. Tragarmsystem nach einem der Ansprüche 1 bis 3,
**dadurch gekennzeichnet,**
**dass** der Adapter (40) ein Gehäuse (41) aufweist, in das der Kabelkanal eingebracht ist,
**dass** der Kabelkanal über eine erste Kabeldurchführung (46.1) in räum-licher Verbindung mit dem Innenraum des Aufnahmegehäuses und über eine zweite Kabeldurchführung (46.2) in räumlicher Verbindung mit einem von dem Tragarm (30) gebildeten Kabelkanal (32) steht,
**dass** die zweite Kabeldurchführung (46.2) in den über die Gehäuserückseite vorstehenden Verbindungsabschnitt (49) des Adapters (40) eingebracht ist, und
**dass** das Gehäuse (41) des Adapters (40) im Bereich zwischen den beiden Kabeldurchführungen (46.1 und 46.2) eine Revisionsöffnung (42) aufweist, die in den Kabelkanal des Adapters (40) mündet und die mit einer Abdeckung (54) verschließbar ist.

5. Tragarmsystem nach einem der Ansprüche 1 bis 4,
**dadurch gekennzeichnet,**
**dass** der Adapter (40) mit einem Ansatz (47) in die offene Rückseite des Aufnahmegehäuses hinein ragt,
**dass** der Kabelkanal des Adapters (40) durch den Ansatz (47) hindurch in das Aufnahmegehäuse mündet,
**dass** der Ansatz (47) einen Dichtabschnitt (44) aufweist, der in einen Dichtabschnitt des Gehäuserahmens (10) übergeht,
**dass** die, die Gehäuserückseite überdeckende Rückwand (15) an dem Gehäuserahmen (10) angebracht ist, und
**dass** die Rückwand (15) auf einer, zwischen den Dichtabschnitten (44) und der Rückwand (15) angeordneten Dichtung (45) abgestützt ist.

6. Tragarmsystem nach Anspruch 5,
**dadurch gekennzeichnet,**
**dass** die Rückwand (15) einen Ausschnitt (16) aufweist, der zu einer Rückwandseite hin geöffnet ist,
**dass** der Rand des Ausschnittes (18) über die Dichtung (45) auf den Dichtabschnitt (44) des Ansatzes (47) abgestützt ist, so dass die Rückwand (15) bei angebautem Adapter (40) von dem Aufnahmegehäuse abbaubar ist.

7. Tragarmsystem nach einem der Ansprüche 1 bis 6,
**dadurch gekennzeichnet,**
**dass** der Adapter (40) ein Stützteil (52) aufweist, das in den Innenraum des Aufnahmegehäuses hinein ragt und an der Innenseite des zugeordneten Rahmenprofils (11) anliegt, und
**dass** das Stützteil (52) innenseitig mit dem Rahmenprofil (11) verbunden ist.

8. Tragarmsystem nach einem der Ansprüche 1 bis 7,
**dadurch gekennzeichnet,**
**dass** in die Rahmenprofile (11) des Gehäuserahmens (10) eine Befestigungsnut (11.6) eingearbeitet ist, an der die die offene Rückseite des Aufnahmegehäuses überdeckende Rückwand (15) befestigt ist, und
**dass** der Adapter (40) über die Befestigungsnut (11.6) an den Gehäuserahmen (10) angeschraubt ist.

9. Tragarmsystem nach Anspruch 7,
**dadurch gekennzeichnet,**
**dass** das Stützteil (52) lösbar an dem Adapter (40) befestigt ist.

10. Tragarmsystem nach einem der vorhergehenden Ansprüche,
**dadurch gekennzeichnet,**
**dass** die Rahmenprofile (11) des Gehäuserahmens (10) als Strangpress-Profilabschnitte ausgebildet sind.

## Claims

1. Support arm system having a support arm and a holding fixture housing, a pivot joint being connected to the holding fixture housing by way of an adapter, and the support arm, the pivot joint and the adapter forming a cable duct, which opens into the interior of the holding fixture housing, **characterized in that** the holding fixture housing has a housing frame which is assembled from frame profiles (11) and which at the rear is or can be closed by a separate rear wall (15), and that the adapter (40) is connected to at least one of the frame profiles (11) and has a connecting section (49), at the rear, projecting beyond the frame profile (11), for the pivot joint (20).

2. Support arm system according to Claim 1, **characterized in that** the connecting section (49) of the adapter (40) has a mounting surface to which the pivot joint (20) is coupled, and that the mounting surface is arranged parallel to the assigned side of the housing and is joined to the coupled frame profile (11).

3. Support arm system according to Claim 2, **characterized in that** the mounting surface of the adapter (40) lies in a plane with a profile side of the frame profile (11) arranged parallel to the assigned housing side.

4. Support arm system according to any one of Claims 1 to 3, **characterized in that** the adapter (40) has a housing (41), into which the cable duct is introduced, that the cable duct is spatially connected by way of a first cable bushing (46.1) to the interior of the holding fixture housing and is spatially connected by way of a second cable bushing (46.2) to a cable duct (32) formed by the support arm (30), that the second cable bushing (46.2) is introduced into the connecting section (49) of the adapter (40) projecting beyond the rear of the housing, and that the housing (41) of the adapter (40) in the area between the two cable bushings (46.1 and 46.2) has an inspection opening (42), which opens into the cable duct of the adapter (40) and which can be closed by a cover (54).

5. Support arm system according to any one of Claims 1 to 4, **characterized in that** the adapter (40) with a shoulder (47) projects into the open rear side of the holding fixture housing, that the cable duct of the adapter (40) opens into the holding fixture housing through the shoulder (47), that the shoulder (47) has a sealing section (44), which merges into a sealing section of the housing frame (10), that the rear wall (15) covering the rear side of the housing is fitted to the housing frame (10), and that the rear wall (15) is supported on a seal (45) arranged between the sealing sections (44) and the rear wall (15).

6. Support arm system according to Claim 5, **characterized in that** the rear wall (15) has a cut-out section (18), which is open towards a rear wall side, and that the edge of the cut-out section (18) is supported by way of the seal (45) on the sealing section (44) of the shoulder (47), so that the rear wall (15) can be removed from the holding fixture housing whilst the adapter (40) is still attached.

7. Support arm system according to any one of Claims 1 to 6, **characterized in that** the adapter (40) has a support part (52), which projects into the interior of the holding fixture housing and bears against the inside of the assigned frame profile (11), and that the support part (52) is internally connected to the frame profile (11).

8. Support arm system according to any one of Claims 1 to 7, **characterized in that** a fixing groove (11.6), to which the rear wall (15) covering the open rear side of the holding fixture housing is fixed, is recessed into the frame profiles (11) of the housing frame (10), and that the adapter (40) is screwed to the housing frame (10) via the fixing groove (11.6).

9. Support arm system according to Claim 7, **characterized in that** support part (52) is detachably fixed to the adapter (40).

10. Support arm system according to any one of the preceding claims, **characterized in that** frame profiles (11) of the housing frame (10) take the form of extruded profiles.

## Revendications

1. Système de bras de support avec un bras de support et un boîtier récepteur, sachant qu'une articulation tournante est raccordée au boîtier récepteur par l'intermédiaire d'un adaptateur, et sachant que le bras de support, l'articulation tournante et l'adaptateur forment un conduit de câbles qui débouche à l'intérieur du boîtier récepteur,
**caractérisé en ce que** le boîtier récepteur présente un cadre de boîtier qui est composé de profilés de cadre (11) et qui est ou peut être fermé, sur le côté arrière, par une paroi arrière séparée (15),
et **en ce que** l'adaptateur (40) est assemblé à au moins un des profilés de cadre (11) et présente une partie d'assemblage (49) pour l'articulation tournante (20), partie qui dépasse du profilé de cadre (11) sur le côté arrière.

2. Système de bras de support selon la revendication 1, **caractérisé en ce que** la partie d'assemblage (49) de l'adaptateur (40) présente une surface de montage à laquelle est accouplée l'articulation tournante (20),
et **en ce que** la surface de montage est disposée parallèlement au côté associé du boîtier et se raccorde au profilé de cadre accouplé (11).

3. Système de bras de support selon la revendication 2, **caractérisé en ce que** la surface de montage de l'adaptateur (40) se trouve dans le même plan qu'un côté du profilé de cadre (11) qui est disposé parallèlement au côté de boîtier associé.

4. Système de bras de support selon l'une quelconque des revendications 1 à 3, **caractérisé en ce que** l'adaptateur (40) présente un boîtier (41) dans lequel est ménagé le conduit de câbles,
**en ce que** le conduit de câbles se trouve par l'intermédiaire d'une première traversée de câbles (46.1) en liaison spatiale avec l'intérieur du boîtier récepteur, et par l'intermédiaire d'une deuxième traversée de câbles (46.2) en liaison spatiale avec un conduit de câbles (32) formé par le bras de support (30),
**en ce que** la deuxième traversée de câbles (46.2) est ménagée dans la partie d'assemblage (49) de l'adaptateur (40) qui dépasse du côté arrière du boîtier,
et **en ce que** le boîtier (41) de l'adaptateur (40) présente, dans la région située entre les deux traversées de câbles (46.1 et 46.2), une ouverture de révision (42) qui débouche dans le conduit de câbles de l'adaptateur (40) et qui peut être fermée par un cache (54).

5. Système de bras de support selon l'une quelconque des revendications 1 à 4, **caractérisé en ce que** l'adaptateur (40) dépasse par un appendice (47) à l'intérieur du côté arrière ouvert du boîtier récepteur,
**en ce que** le conduit de câbles de l'adaptateur (40) débouche dans le boîtier récepteur en traversant l'appendice (47),
**en ce que** l'appendice (47) présente une partie d'étanchéité (44) qui se poursuit par une partie d'étanchéité du cadre de boîtier (10),
**en ce que** la paroi arrière (15), qui recouvre le côté arrière du boîtier, est montée sur le cadre de boîtier (10),
et **en ce que** la paroi arrière (15) s'appuie sur un joint d'étanchéité (45) disposé entre la partie d'étanchéité (44) et la paroi arrière (15).

6. Système de bras de support selon la revendication 5, **caractérisé en ce que** la paroi arrière (15) présente une découpure (18) qui est ouverte vers un côté de la paroi arrière,
**en ce que** le bord de la découpure (18) s'appuie par l'intermédiaire du joint d'étanchéité (45) sur la partie d'étanchéité (44) de l'appendice (47), de sorte que la paroi arrière (15) peut être déposée du boîtier récepteur lorsque l'adaptateur (40) est en place.

7. Système de bras de support selon l'une quelconque des revendications 1 à 6, **caractérisé en ce que** l'adaptateur (40) présente une partie de soutien (52) qui dépasse à l'intérieur du boîtier récepteur et s'applique contre le côté intérieur du profilé de cadre associé (11),
et **en ce que** la partie de soutien (52) est assemblée sur le côté intérieur au profilé de cadre (11).

8. Système de bras de support selon l'une quelconque des revendications 1 à 7, **caractérisé en ce qu'**une rainure de fixation (11.6) est ménagée dans les profilés de cadre (11) du cadre de boîtier (10), sur laquelle est fixée la paroi arrière (15) qui recouvre le côté arrière ouvert du boîtier récepteur,
et **en ce que** l'adaptateur (40) est vissé par l'intermédiaire de la rainure de fixation (11.6) sur le cadre de boîtier (10).

9. Système de bras de support selon la revendication 7, **caractérisé en ce que** la partie de soutien (52) est fixée de manière amovible sur l'adaptateur (40).

10. Système de bras de support selon l'une quelconque des revendications précédentes, **caractérisé en ce que** les profilés de cadre (11) du cadre de boîtier (10) sont réalisés sous la forme de tronçons de profilés extrudés.
